# EUROPÄISCHE PATENTSCHRIFT

(11) **EP 1 733 155 B1**
(45) Veröffentlichungstag und Bekanntmachung des Hinweises auf die Patenterteilung: **21.05.2008**
(21) Anmeldenummer: 05735239.5
(22) Anmeldetag: 08.04.2005
(51) Int. Cl.: F16H 21/24, B60N 2/02

(54) **STELLANTRIEB**
ACTUATOR
SERVOMOTEUR

(30) Priorität: 08.04.2004 DE 102004017396; 21.08.2004 DE 102004040602
(43) Veröffentlichungstag der Anmeldung: 20.12.2006
(73) Patentinhaber: Wolf, Erwin, 71364 Winnenden (DE)
(72) Erfinder: Wolf, Erwin, 71364 Winnenden (DE)
(74) Vertreter: Wasmuth, Rolf
(86) Internationale Anmeldenummer: PCT/EP2005/003716
(87) Internationale Veröffentlichungsnummer: WO 2005/097540

(56) Entgegenhaltungen:
- GB-A- 2 040 389
- GB-A- 2 345 633
- US-A- 1 682 788
- US-A- 5 005 906
- US-A- 5 350 216

## Beschreibung

Die Erfindung betrifft einen Stellantrieb insbesondere für Komponenten eines Kraftfahrzeuges wie eine elektrische Sitzverstellung oder dgl. mit den Merkmalen nach dem Oberbegriff des Anspruchs 1. US-A-5 350216 zeigt einen solchen Antrieb.

Stellantriebe für bewegliche Komponenten sind hohen Anforderungen hinsichtlich Leistungsfähigkeit, Robustheit und Zuverlässigkeit bei gleichzeitig geringem Bauvolumen ausgesetzt. Insbesondere im Kraftfahrzeugbereich werden Stellantriebe beispielsweise für eine elektrische Sitzverstellung eingesetzt, wobei eine Rückenlehnen-, Sitzhöhen- und horizontale Positionsverschiebung mit entsprechenden Stellantrieben ausgeführt wird. Es sind entsprechend leistungsfähige Antriebsmotoren vorgesehen, deren hohe Antriebsdrehzahl mit einem geeigneten Untersetzungsgetriebe auf eine entsprechend geringe Abtriebsdrehzahl herabgesetzt wird.

Zur Bildung einer geeigneten hohen Untersetzung bei geringem Bauraum wird ein sogenanntes Taumelradgetriebe eingesetzt, bei dem ein Taumelrad mittels einer Führungseinrichtung bezogen auf ein Getriebegehäuse im wesentlichen drehfest gehalten und zur Ausführung einer Taumelbewegung auf einer Kreisbahn freigegeben ist. Mittels des Antriebsmotors wird das Taumelrad auf einer Kreisbahn bewegt, ohne daß dabei das Taumelrad selbst eine Eigendrehung vollzieht. Das Taumelrad ist mit einem Zahnrad mit einer Außenverzahnung versehen, die in ein Hohlrad mit einer Innenverzahnung des Abtriebes eingreift. Für eine hohe Untersetzungswirkung weist die Innenverzahnung des Hohlrades eine nur geringfügig größere Zähnezahl als das Zahnrad des Taumelrades auf. Das drehbar gelagerte Abtriebsrad rollt dabei auf dem drehfest gehaltenen Taumelrad ab, wobei die Drehzahl des Abtriebsrades deutlich geringer ist als die Umlaufdrehzahl des Taumelrades auf seiner Kreisbahn.

Für die untersetzende Kraftübertragung zwischen dem Taumelrad und dem Abtriebsrad ist eine Führung des Taumelrades erforderlich, die eine freie laterale Verschieblichkeit auf einer Kreisbahn zuläßt und gleichzeitig eine Eigendrehung des Taumelrades verhindert. Bekannte Ausführungen derartiger Führungen sind kompliziert im Aufbau und mechanisch anfällig.

Der Erfindung liegt die Aufgabe zugrunde, einen Stellantrieb der eingangs beschriebenen Gattung derart weiterzubilden, daß eine vereinfachte und zuverlässige Führung des Taumelrades gegeben ist.

Diese Aufgabe wird durch einen Stellantrieb mit den Merkmalen des Anspruchs 1 gelöst.

Es wird ein Stellantrieb mit einem Taumelrad vorgeschlagen, dessen Führungseinrichtung einen insbesondere einteilig an das Taumelrad angeformten Führungsarm umfaßt. Der Führungsarm ist mittels einer Radialführung in einer bezogen auf die Kreisbahn radialen Richtung verschieblich und im wesentlichen drehfest gehalten. Der Führungsarm erlaubt je nach Ausführung seiner Lagerung eine schwenkende oder rotierende Bewegung seiner selbst zusammen mit dem Taumelrad. Gleichzeitig verhindert der Führungsarm mittels seiner Radialführung eine Eigendrehung des Taumelrades. Hochuntersetzte Drehbewegungen können mit konstruktiv und fertigungstechnisch einfachem Aufbau zuverlässig und mit hohem Drehmoment übertragen werden.

In vorteilhafter Weiterbildung ist zum Antrieb des Taumelrades ein Exzenter mit einem exzentrisch umlaufenden Lagerzapfen vorgesehen, der in eine insbesondere mittige Lageröffnung des Taumelrades eingreift. Es ergibt sich eine gleichförmige Bewegung des Taumelrades auf seiner Kreisbahn, wobei die drehende Lagerung des Lagerzapfens in der Lageröffnung bei geringem Verschleiß hoch belastbar ist.

Zum Antrieb des Exzenters ist vorteilhaft ein Schneckentrieb vorgesehen. Es ergibt sich eine erste hochuntersetzte Getriebestufe, die nur geringen Bauraum erfordert und dabei selbsthemmend ist. Die zu bewegenden Komponenten können mit geringem Kraftaufwand verstellt werden, wobei auf die entsprechende Komponente wirkende äußere Lasten infolge der Selbsthemmung nicht zu einer selbsttätigen, unerwünschten Verstellung führen.

In einer vorteilhaften Ausführung ist der Führungsarm des Taumelrades als Schwenkarm ausgeführt, dessen radial außenliegendes freies Ende an einer Schwenklagerung der Radialführung gelagert ist. Das freie Ende des Schwenkarmes weist zweckmäßig einen gerundet erweiterten Gelenkkopf auf, der zwischen zwei zueinander parallelen Wänden einer gehäusefesten Radialnut gleitend geführt ist. Bei einer angetriebenen Bewegung des Taumelrades auf einer Kreisbahn ist eine Eigendrehung des Taumelrades mittels des Schwenkarmes verhindert. Gleichzeitig ist eine laterale Verschieblichkeit des Taumelrades in zwei senkrecht aufeinander stehenden, in der Ebene der Kreisbahn liegenden Richtungen freigegeben. Eine freigegebene Richtung entspricht dabei der radialen Richtung der gehäusefesten Radialnut, während die senkrecht dazu liegende freigegebene Richtung durch die quer zur radialen Richtung liegende Schwenkrichtung vorgegeben ist. Die Bewegung des Taumelrades auf seiner Kreisbahn besteht aus zwei Komponenten, von denen die eine die radiale Verschiebung und die andere die quer dazu liegende Schwenkbewegung ist. Als Schwenkachse dient dabei der Gelenkkopf, der auch gleichzeitig die radiale Führung in der Radialnut bewirkt. Es ist nur ein einziger Schwenkarm erforderlich, der in eine entsprechende gehäusefeste Radialnut eingreift, wobei in Doppelfunktion der Gelenkkopf im Zusammenspiel mit der Radialnut eine taumelnde Kreisbewegung des Taumelrades freigibt und gleichzeitig eine Eigendrehung zuverlässig verhindert. Weitere Führungseinrichtungen sind nicht erforderlich. Es ist eine zuverlässige Verdrehsicherung gegeben. Die Bildung von verschleißbehafteten Reibpaarungen ist auf das Wechselspiel des Gelenkkopfes mit den Nutwänden beschränkt. Es ist ein kinematisch einfacher, robuster und zuverlässiger Aufbau gefunden, der hochbelastbar ist. Insbesondere beim Einsatz in einer Sitzverstellung ist eine hohe Tragfähigkeit gegen beispielsweise unfallbedingte Stoßbelastungen gegeben, die zur Sicherheit der Anordnung beiträgt.

Die im wesentlichen drehfeste Halterung des Taumelrades in der Radialführung und die quer dazu wirkende Schwenklagerung bewirkt eine geringfügige, oszillierende Drehbewegung des Taumelrades um eine drehfeste Neutrallage. Es hat sich überraschend gezeigt, daß deren Auswirkung auf die Gleichförmigkeit der Abtriebsdrehzahl bei entsprechend langem Schwenkarm nur gering und im wesentlichen vernachlässigbar ist. Zur weiteren Verminderung dieses Effektes ist zweckmäßig eine Anordnung vorgesehen, bei der durch die parallelen Wände der Radialnut ein Führungsabschnitt gebildet ist, an den sich radial innenliegend ein nach innen sich erweiternder Schwenkabschnitt anschließt. Der Führungsabschnitt liegt dabei bezogen auf die Lage des Taumelrades in einem radial vergrößerten Abstand. Der in dem Führungsabschnitt gleitend und schwenkend geführte Gelenkkopf des entsprechend verlängerten Schwenkarmes führt zu einem entsprechend vergrößerten Schwenkradius. Die Kreisbahnbewegung des Taumelrades gibt eine Schwenkamplitude vor, die in Folge des vergrößerten Schwenkradius eine verringerte Amplitude der oszillierenden Eigendrehung bewirkt. Die Gleichförmigkeit der Abtriebsdrehzahl ist gesteigert. Der sich erweiternde Schwenkabschnitt der Radialnut erlaubt ohne Einschränkung des tragenden Querschnittes vom Schwenkarm eine freie Schwenkbewegung.

In einer vorteilhaften Ausführung ist das freie Ende des Führungsarmes auf einer Kreisbahn synchron zur Taumelbewegung des Taumelrades auf dessen Kreisbahn zwangsgeführt. Die Baueinheit aus Führungsarm und Taumelrad erfährt dabei eine kreisende, translatorische Parallelverschiebung, ohne daß dabei eine oszillierende Eigendrehung auftritt. Es ist eine exakt gleichförmige Drehübertragung vom Antrieb auf den Abtrieb erzielbar.

Zur Zwangsführung des freien Endes vom Führungsarm ist zweckmäßig ein weiterer Exzenter mit einem exzentrisch umlaufenden Lagerzapfen vorgesehen, der in eine Lageröffnung des freien Endes vom Führungsarm eingreift.

In einer zweckmäßigen Ausführung sind die beiden Exzenter auf gegenüberliegenden Seiten des Schneckentriebes angeordnet und von diesem angetrieben. Entsprechende Verzahnungen beider Exzenter greifen an gegenüberliegenden Punkten der Antriebsschnecke ein, in dessen Folge die Antriebsschnecke und damit die Baueinheit insgesamt eine nur geringe, kompakte Baulänge aufweist.

In einer vorteilhaften Alternative sind die beiden Exzenter in Achsrichtung des Schneckentriebes gegeneinander versetzt auf der gleichen Seite des Schneckentriebes angeordnet und von diesem angetrieben. Bezogen auf eine quer zur Achsrichtung der Antriebsschnecke liegenden Richtung ergibt sich ein entsprechend geringer erforderlicher Bauraum. Gleichzeitig ist sichergestellt, daß beide Exzenter die gleiche Drehrichtung aufweisen. Die zugehörigen Lagerzapfen können spielfrei in entsprechend kreisrunde Lageröffnungen der beiden Exzenter eingreifen, wodurch der Übertragungsstrang steif und gleichzeitig verschleißarm ist. Es kann dabei vorteilhaft sein, daß das Taumelrad einen in zwei gegenüberliegende radiale Richtungen sich erstreckenden Führungsarm mit zwei gegenüberliegenden freien Enden aufweist und insbesondere etwa mittig zwischen den beiden Exzentern angeordnet ist. Die beiden freien Enden des Führungsarmes sind dabei an dem jeweils zugeordneten Exzenter zwangsgeführt. Die kreisende Parallelogrammführung des Führungsarmes und des mittigen Taumelrades wird durch die beiden äußeren Exzenter sichergestellt. Es ergibt sich eine hochbelastbare, symmetrische und damit kippmomentenfreie Kraftübertragung.

In einer vorteilhaften Ausführung ist an beiden Enden des Führungsarmes je ein Taumelrad zum Antrieb je eines Abtriebsrades angeordnet. Die beiden mittels des Führungsarmes untereinander verbundenen Taumelräder führen gemeinsam und synchron eine Taumelbewegung aus, die als untersetzte Drehbewegung auf die beiden Abtriebsräder übertragen wird. Mittels eines einzigen Antriebes können über die beiden Abtriebsräder bei nur geringem konstruktiven Zusatzaufwand zwei unterschiedliche Bewegungsabläufe synchron angesteuert werden. Drehzahl bzw. Untersetzungsverhältnis beider Abtriebe können durch Wahl der entsprechenden Verzahnungen unabhängig voneinander vorgegeben werden.

Der Exzenter ist zweckmäßig auf einem durchgehenden, insbesondere aus Stahl gefertigten Achsbolzen drehbar gelagert, wobei der exzentrische Lagerzapfen in seinem Durchmesser derart bemessen ist, daß der Achsbolzen innerhalb der Umfangskontur des exzentrischen Lagerzapfens liegt. Die durchgehende Ausführung des Achsbolzens erlaubt dessen beidseitige Abstützung. Gegenüber einer einseitig gelagerten Ausführung entsteht eine deutlich verminderte Biegebelastung. Es ist eine erhöhte Tragfähigkeit gegeben, ohne daß der innerhalb der Umfangskontur des Lagerzapfens liegende Achsbolzen die exzentrische und kreisbahnförmige Umlaufbewegung des Lagerzapfens behindert.

Der Lagerzapfen und insbesondere eine einteilige Ausführung des Lagerzapfens zusammen mit dem Exzenter ist vorteilhaft aus selbstschmierendem Kunststoff gefertigt, wobei der Lagerzapfen in seinem in Richtung der Exzentrizität liegenden Bereich eine gegen den Achsbolzen gestützte Metalleinlage aufweist. Im Zusammenspiel mit einer metallischen Ausführung des Taumelrades ergibt sich eine selbstschmierende Gleitpaarung mit geringer Reibung und geringem Verschleiß. Eine beispielsweise unfallbedingte Stoßbelastung des Stellantriebes überträgt sich auf den Exzenter, wobei die Metalleinlage eine radiale Verformung des exzentrischen Lagerzapfens verhindert. Das Taumelrad wird zuverlässig auf seiner exzentrischen Bahn und damit im Eingriff mit der Innenverzahnung des Abtriebsrades gehalten. Die Kraftübertragung zwischen Antrieb und Abtrieb ist dauerhaft gewährleistet. Beispielsweise im Zusammenhang mit einer Sitzverstellung ist eine ungewollte Lageänderung des Sitzes in Folge einer Stoßbelastung vermieden.

In einer zweckmäßigen Weiterbildung ist das Abtriebsrad gemeinsam mit dem Exzenter auf dem Achsbolzen gelagert. Es ist eine zuverlässige Lagefixierung beider Bauteile gegeneinander gewährleistet, die auch bei hohen Betriebslasten einen zuverlässigen Eingriff der zwischen beiden Bauteilen wirkenden Verzahnung sicherstellt. Insbesondere weist das Abtriebsrad eine außenseitige Lagerfläche auf, mittels derer das Abtriebsrad in dem Gehäuse drehbar gelagert ist. Der durchlaufende Achsbolzen kann dabei auf der Antriebsseite gehäusefest gehalten sein, während auf der gegenüberliegenden Abtriebsseite eine mittelbare Abstützung über das Abtriebsrad und dessen Lagerfläche gegen das Getriebegehäuse vorgesehen ist. Der Achsbolzen braucht nicht durch das Abtriebsrad hindurchgeführt werden, wodurch das Abtriebsrad frei auf einen beliebig ausgebildeten Abtrieb wirken kann. Die mittelbare Abstützung des abtriebseitigen Achsbolzenendes entspricht in ihrer mechanischen Wirkung jedoch einer gehäusefesten Lagerung mit einer entsprechend hohen Tragfähigkeit. Es ergibt sich eine kombinierte Führung des Abtriebsrades mit seiner Lagerfläche direkt im Gehäuse und auch auf dem Achsbolzen. Es ist eine hohe Lagegenauigkeit des Abtriebsrades sowohl gegenüber dem Gehäuse und einem daran befestigten beliebigen Abtrieb als auch gegenüber dem Taumelrad sichergestellt. Alle beweglichen Komponenten greifen zuverlässig ineinander.

Das Taumelrad weist vorteilhaft ein angeformtes Zahnrad auf, welches insbesondere mittels Durchprägen eines Metallrohlings gebildet ist. Ein zahnradförmig geformter Prägestempel wird in den Metallrohling hineingedrückt, wobei das Material in eine entsprechend zahnradförmig geformte Matrize auf der gegenüberliegenden Seite fließt. Die entstehende, durch die Matrize geformte Außenverzahnung ist mit geringem Aufwand und hoher Präzision fertigbar.

In vorteilhafter Weiterbildung sind insbesondere als Bundschrauben ausgeführte Befestigungsschrauben durch das insbesondere aus Kunststoff ausgeführte Gehäuse des Untersetzungsgetriebes über zumindest näherungsweise dessen gesamte Dicke hindurchgeführt und zur Verschraubung des Gehäuses mit der durch den Stellantrieb anzutreibenen Baugruppe vorgesehen. Zweckmäßig ist dabei das Gehäuse durch ein Unterteil und ein Deckelteil gebildet, wobei die Befestigungsschrauben durch das Unterteil und das Deckelteil hindurchgeführt sind. Zumindest zwei der Befestigungsschrauben sind bevorzugt auf einer Linie angeordnet, die in einem Winkel von zumindest näherungsweise 45° zu einer Drehachse des Antriebsmotors bzw. einer Antriebsschnecke liegt, wobei das Abtriebsrad bevorzugt zwischen den beiden Befestigungsschrauben liegt. Über die reine Befestigungsfunktion hinaus bewirken die Befestigungsschrauben eine Stabilisierung des Getriebegehäuses. Es hat sich überraschend gezeigt, daß insbesondere bei der zuvor beschriebenen 45°-Anordnung der Befestigungsschrauben der Gewinn an Gehäusefestigkeit besonders ausgeprägt ist. Das Gehäuse bzw. dessen Unterteil und Deckelteil können kostengünstig und leichtgewichtig aus Kunststoff gefertigt werden. Auftretende außerordentliche Betriebslasten durch Crash- und Stoßbeanspruchung beispielsweise einer Sitzverstellung oder dgl., die von der anzutreibenden Baugruppe auf den Abtrieb und von dort auf das Untersetzungsgetriebe übertragen werden, können von dem Getriebegehäuse zuverlässig aufgenommen werden. Ein Aufplatzen des Gehäuses unter Extremlast ist vermieden.

Ein Ausführungsbeispiel der Erfindung ist im folgenden anhand der Zeichnung näher beschrieben. Es zeigen:
- Fig. 1: in einer Übersichtsdarstellung einen Stellantrieb mit einem elektrischen Antriebsmotor und einem teilweise geöffneten Getriebe;
- Fig. 2: eine Schnittdarstellung des Untersetzungsgetriebes nach Fig. 1;
- Fig. 3: in einer perspektivischen Explosionsdarstellung den Stellantrieb nach Fig. 1 mit Details der einzelnen Getriebekomponenten nach Fig. 2;
- Fig. 4: in einer vergrößerten Draufsicht das Taumelrad nach Fig. 3;
- Fig. 5: in einer perspektivischen, teilweise geschnittenen Darstellung das Taumelrad nach Fig. 4 mit Einzelheiten seines durchgeprägten Zahnrades;
- Fig. 6: in einer schematischen Prinzipdarstellung die drehfeste Führung des Taumelrades auf einer Kreisbahn;
- Fig. 7: eine Phasendarstellung der Anordnung nach Fig. 6 mit geschwenktem und radial verschobenen Taumelrad;
- Fig. 8: eine weitere Phasendarstellung der Anordnung nach den Fig. 6 und 7 nach Vollendung einer halben Kreisbahnbewegung;
- Fig. 9: als abschließende Phasendarstellung die Bewegung des Taumelrades der Anordnung nach den Fig. 6 bis 8 bei nahezu vollendeter Kreisbahnbewegung;
- Fig. 10: in einer perspektivischen Ansicht eine Variante der Anordnung nach den Fig. 1 bis 9 in teilweise demontiertem Zustand mit zwei bezogen auf die Antriebsschnecke sich gegenüberliegenden Exzentern;
- Fig. 11: die Anordnung nach Fig. 10 mit aufgesetztem, an beiden Exzentern geführtem Taumelrad;
- Fig. 12: in einer teilweise geschnittenen Seitenansicht eine Variante der Anordnung nach den Fig. 10 und 11 mit zwei bezogen auf die Antriebsschnecke gleichseitig angeordneten Exzentern;
- Fig. 13: in einer perspektivischen Darstellung die Anordnung nach Fig. 12 mit Einzelheiten zum aufgesetzten Taumelrad und dessen zweiendigen Führungsarm;
- Fig. 14: eine Draufsicht des Ausführungsbeispieles nach den Fig. 10 und 11 mit Schraublöchern im Getriebegehäuse für durchgehende Befestigungsschrauben;
- Fig. 15: eine perspektivische Ansicht der Anordnung nach Fig. 14 mit durchgesteckten Befestigungssschrauben;
- Fig. 16: in einer perspektivischen Darstellung ein Ausführungsbeispiel mit geöffnetem Getriebegehäuse und zwei Taumelrädern;
- Fig. 17: die Anordnung nach Fig. 16 mit zwei montierten Abtriebsrädern.

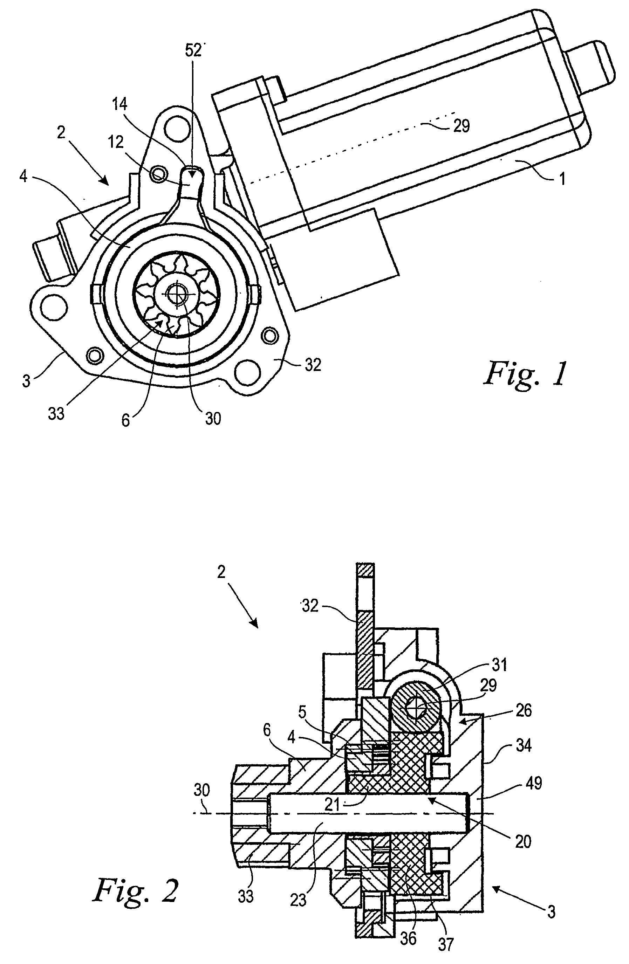

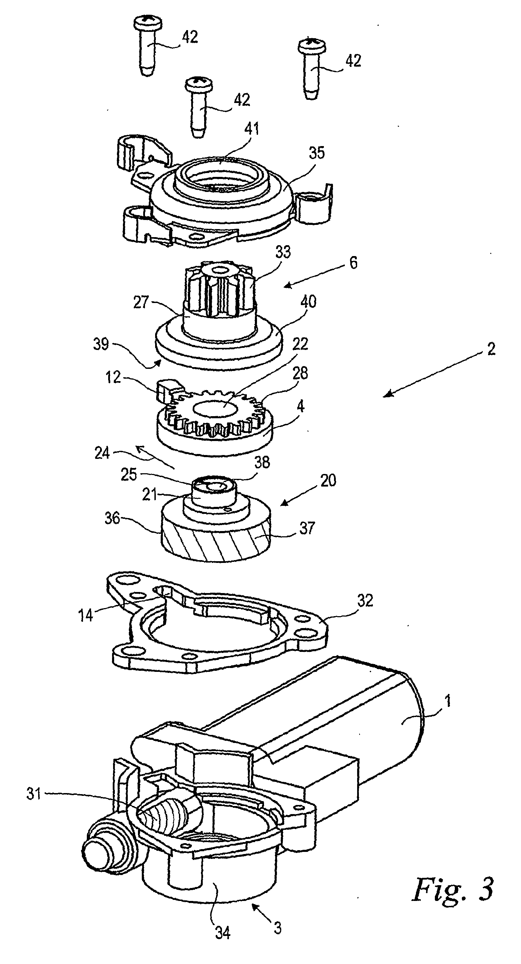

Fig. 1 zeigt in einer schematischen Übersichtsdarstellung einen Stellantrieb für eine elektrische Sitzverstellung eines Kraftfahrzeuges. Der gezeigte Stellantrieb kann auch vorteilhaft für einen elektrischen Fensterheber, eine Cabrio-Verdeckbetätigung oder für vergleichbare Anwendungen vorgesehen sein. Der Stellantrieb umfaßt einen elektrischen Antriebsmotor 1 und ein Untersetzungsgetriebe 2 mit einem Abtriebsrad 6. Ein Gehäuse 3 des Untersetzungsgetriebes 2 ist am Antriebsmotor 1 angeflanscht. Mittels des Untersetzungsgetriebes 2 wird ein schnelle Antriebsdrehbewegung des Antriebsmotors um eine Drehachse 29 in eine untersetzte, langsame Drehbewegung des Abtriebsrades 6 umgewandelt. Das Abtriebsrad 6 dreht dabei um eine Drehachse 30, die im rechten Winkel und achsversetzt zur Drehachse 29 des Antriebsmotors 1 liegt. Das Abtriebsrad 6 ist als Zahnrad 33 ausgebildet, welches in einen nicht näher dargestellten Abtrieb beispielsweise in Form einer Zahnstange oder dgl. eingreift. Der besseren Übersichtlichkeit halber ist das Gehäuse 3 mit abgenommenem Deckelteil 35 nach Fig. 3 gezeigt. Der Darstellung ist zu entnehmen, daß ein Taumelrad 4 mit einem Führungsarm 52 versehen ist, der im gezeigten Ausführungsbeispiel einteilig an das Taumelrad 4 angeformt ist. Der Führungsarm 52 ist als Schwenkarm 12 ausgeführt und greift in eine Radialnut 14 ein. Die Radialnut 14 ist in einer Zwischenplatte 32 des Gehäuses 3 ausgebildet.

Fig. 2 zeigt in einer Schnittdarstellung das Untersetzungsgetriebe 2 nach Fig. 1. Von dem Gehäuse 3 ist ein Unterteil 34 und die darauf aufliegende Zwischenplatte 32 gezeigt. An dem Unterteil 34 des Gehäuses 3 ist ein Achsbolzen 23 gehalten. Im gezeigten Ausführungsbeispiel ist der Achsbolzen 23 in eine Rückwand 49 des Gehäuses 3 eingepreßt. Der Achsbolzen 23 kann auch eingeschraubt oder in anderer Weise befestigt sein. Auf dem Achsbolzen 23 sind ein Exzenter 20 und das Abtriebsrad 6 mit dem stirnseitig angeformten Zahnrad 33 drehbar gelagert. Es kann auch zweckmäßig sein, daß der Achsbolzen 23 fest im Abtriebsrad 6 oder im Exzenter 20 gehalten ist, wobei eine Relativverdrehung zwischen dem Achsbolzen 23 und den verbleibenden weiteren Komponenten vorgesehen ist.

Zum Antrieb des Exzenters 20 ist ein Schneckentrieb 26 vorgesehen, der eine Antriebsschnecke 31 und ein Stirnrad 36 umfaßt. Die Antriebsschnecke 31 ist um die Drehachse 29 des Antriebsmotors 1 (Fig. 1) drehbar und greift in eine Stirnverzahnung 37 des Stirnrades 36 ein. Durch Drehung der Antriebsschnecke 31 wird das Stirnrad 36 um den Achsbolzen 23 mit der Drehachse 30 in Drehung versetzt.

Ein Lagerzapfen 21 ist einteilig mit dem Stirnrad 36 aus selbstschmierendem Kunststoff geformt, wobei der Lagerzapfen 21 bezogen auf die Drehachse 30 exzentrisch zum Stirnrad 36 angeordnet ist. Es ist dadurch der Exzenter 20 gebildet. Der Durchmesser des Lagerzapfens 21 ist derart bemessen, daß der Achsbolzen 23 innerhalb der Umfangskontur des exzentrischen Lagerzapfens 21 liegt und dabei von der Rückwand 49 des Gehäuses 3 aus durch den Exzenter 20 hindurch bis in das Abtriebsrad 6 verläuft.

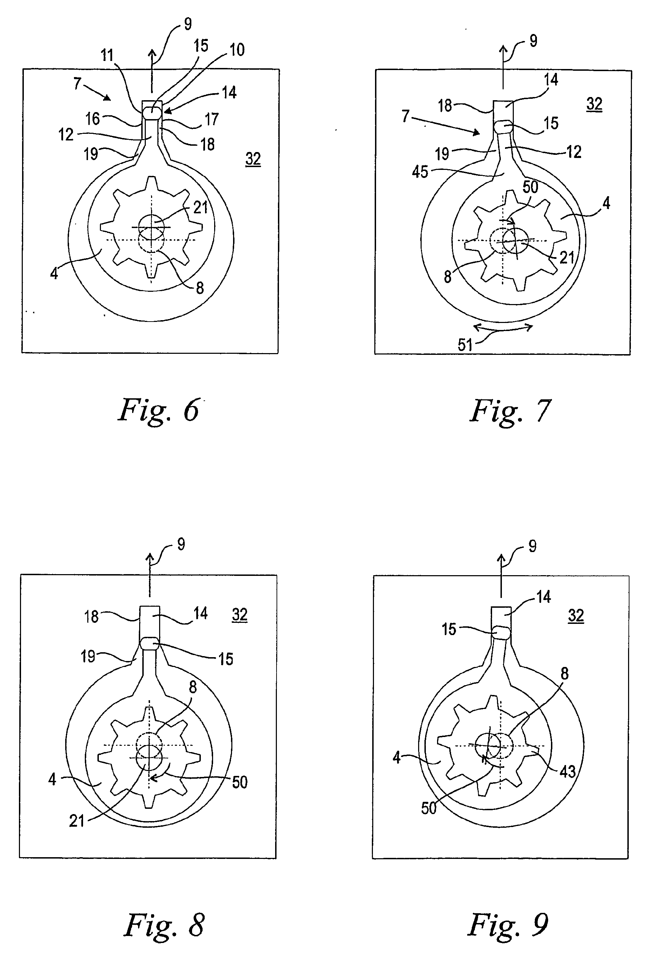

Der Lagerzapfen 21 des Exzenters 20 greift in eine in Fig. 3 dargestellte Lageröffnung 22 des Taumelrades 4. Durch Drehung des Exzenters 20 wird das Taumelrad 4 auf einer in den Fig. 6 bis 9 dargestellten Kreisbahn 8 bewegt, wobei eine Eigendrehung des Taumelrades 4 durch den Schwenkarm 12 und die Radialnut 14 (Fig. 1) behindert ist.

Das Taumelrad 4 wirkt mittels einer Verzahnung 5 mit dem Abtriebsrad 6 zusammen, wobei eine Abrollbewegung des Abtriebsrades 6 in der Verzahnung 5 gegenüber dem im wesentlichen drehfest gehaltenen Taumelrad 4 eine Untersetzung derart bewirkt, daß die Drehzahl des Abtriebsrades 6 gegenüber der Drehzahl des Exzenters 20 bzw. der Umlaufdrehzahl des Taumelrades 4 untersetzt ist. Es ist demnach ein zweistufiges, selbsthemmendes Untersetzungsgetriebe vorgesehen, wobei eine erste, selbsthemmende Untersetzungsstufe durch den Schneckentrieb 26 und eine zweite Untersetzungsstufe durch das Zusammenwirken des Taumelrades 4 mit dem Abtriebsrad 6 gegeben ist.

Fig. 3 zeigt in einer perspektivischen Explosionsdarstellung den Stellantrieb nach Fig. 1 mit Details der Einzelteile des Untersetzungsgetriebes 2 nach Fig. 2. Das Gehäuse 3 des Untersetzungsgetriebes 2 umfaßt das an den Antriebsmotor 1 angeflanschte Unterteil 34 mit der Rückwand 49 (Fig. 2). Weitere Teile des Gehäuses 3 sind die Zwischenplatte 32 mit der Radialnut 14 und das Deckelteil 35. Das Deckelteil 35 wird unter Zwischenlage der Zwischenplatte 32 mittels Schrauben 42 mit dem Unterteil 34 verschraubt.

Radial außenseitig des Unterteiles 34 ist die Antriebsschnecke 31 angeordnet, die zum Eingriff in die Stirnverzahnung 37 des Stirnrades 36 vom Exzenter 20 vorgesehen ist. Der Exzenter 20 weist eine mittig zum Stirnrad 36 angeordnete Achsöffnung 38 auf, mittels derer der Exzenter 20 auf dem Achsbolzen 23 (Fig. 2) drehbar gelagert ist. Der Lagerzapfen 21 des Exzenters 20 ist bezogen auf die mittige Achsöffnung 38 mit einer durch einen Pfeil 24 angedeuteten Exzentrizität versetzt angeordnet. In den aus Kunststoff gefertigten Lagerzapfen 21 ist in Richtung der Exzentrizität 24 eine Metalleinlage 25 eingesetzt bzw. eingespritzt. Die Metalleinlage 25 ist in Form eines Stahlplättchens ausgebildet, welches sich in Achsrichtung über die gesamte Länge des Lagerzapfens 21 und in radialer Richtung von der Innenfläche der Achsöffnung 38 bis zur Außenfläche des Lagerzapfens 21 erstreckt. Es kann auch eine Ausführung zweckmäßig sein, bei der sich die Metalleinlage 25 nur über einen Teilbereich des Lagerzapfens 21 in dessen Achsrichtung erstreckt.

Der exzentrische Lagerzapfen 21 greift in eine mittige Lageröffnung 22 des Taumelrades 4 ein. Betriebslasten, die zwischen dem Taumelrad 4 und dem Exzenter 20 wirken, werden von der Lageröffnung 22 mittels der Metalleinlage 25 in Richtung der Exzentrizität 24 gegen den Achsbolzen 23 (Fig. 2) abgestützt. Der gezeigten perspektivischen Darstellung des Exzenters 20 ist noch zu entnehmen, daß die Umfangskontur des Lagerzapfens 21 die Achsöffnung 38 und damit den Achsbolzen 23 (Fig. 2) vollständig umschließt.

Das Taumelrad 4 ist mit dem Schwenkarm 12 in der Radialnut 14 der Zwischenplatte 23 im wesentlichen drehfest gehalten, wobei jedoch eine radiale und schwenkende Bewegung des Taumelrades 4 derart freigegeben ist, daß die exzentrische Umlaufbewegung des Lagerzapfens 21 durch seinen Eingriff in die mittige Lageröffnung 22 des Taumelrades 4 zu einer in den Fig. 6 bis 9 näher dargestellten Kreisbahnbewegung ohne eine Eigendrehung des Taumelrades 4 führt. Stirnseitig des Taumelrades 4 ist ein Zahnrad 28 angeformt.

Das Abtriebsrad 6 weist auf seiner dem Taumelrad 4 zugewandten Seite eine Glocke 40 mit einer nicht näher dargestellten Innenverzahnung 39 auf. Das Zahnrad 28 des Taumelrades 4 weist einen geringeren Durchmesser bzw. eine geringere Zähnezahl auf als die Verzahnung 39 des Abtriebsrades 6. Die exzentrische Lage des Lagerzapfens 21 vom Exzenter 20 bewirkt eine ebensolche exzentrische Lage des Zahnrades 28 vom Taumelrad 4, wodurch das Zahnrad 28 in die Innenverzahnung 39 des Abtriebsrades 6 eingreift. In Folge der Kreisbahnbewegung des Taumelrades 4 nach den Fig. 6 bis 9 ohne eine Eigendrehung des Taumelrades 4 rollt die Innenverzahnung 39 des Abtriebsrades 6 auf dem Zahnrad 28 des Taumelrades 4 ab. Es entsteht eine untersetzte Drehbewegung des Abtriebsrades 6 relativ zur Antriebsdrehzahl des Exzenters 20.

Zwischen dem Zahnrad 33 und der Glocke 40 ist das Abtriebsrad 6 mit einer umlaufenden Lagerfläche 27 versehen. Im montierten Zustand durchragt das Zahnrad 33 eine Lageröffnung 41 des Deckelteiles 35, wobei die Lagerfläche 27 in der Lageröffnung 41 spielfrei und gleitend gelagert ist. Anstelle des Gleitlagers kann auch eine Wälzlagerung vorgesehen sein. Das nach Fig. 2 in einem innenseitigen Sackloch des Abtriebsrades 6 gehaltene freie Ende des Achsbolzens 23 wird mittelbar über die Lagerfläche 27 gegen die Lageröffnung 41 des Deckelteiles 35 abgestützt. Der Achsbolzen 23 ist damit im Bereich des Deckelteiles 35 und nach Fig. 2 an seinem gegenüberliegenden Ende im Bereich der Rückwand 49 des Gehäuses 3 beidseitig gestützt.

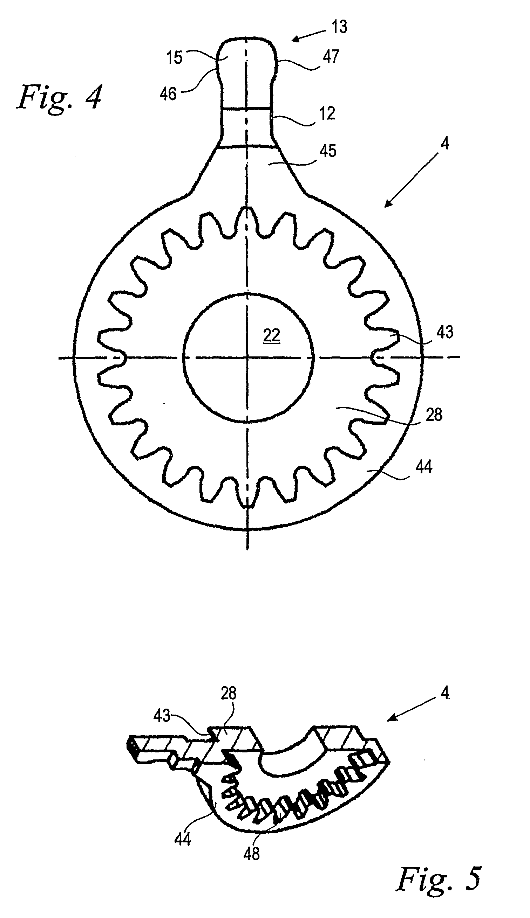

Einzelheiten des Taumelrades 4 sind der vergrößerten Darstellung nach Fig. 4 zu entnehmen. Das Taumelrad 4 ist durch einen kreisscheibenförmigen Grundkörper 44 gebildet, von dem aus sich radial nach außen der Schwenkarm 12 erstreckt. Der Schwenkarm 12 ist einteilig mit dem Grundkörper 44 ausgebildet, wobei der Schwenkarm 12 mittels eines erweiterten Bereiches 45 in den Grundkörper 44 übergeht. An seinem freien Ende 13 weist der Schwenkarm 12 einen erweiterten Gelenkkopf 15 auf, der seitlich über die Kontur des Schwenkarmes 12 hervorsteht. Die erweitert seitlich hervorstehenden Bereiche des Gelenkkopfes 15 sind durch Flanken 46, 47 gebildet, die als Abschnitte eines gemeinsamen Kreises geformt sind. Der kreisscheibenförmige Grundkörper 44, das angeformte Zahnrad 28 mit seiner Außenverzahnung 43 und die Lageröffnung 22 sind konzentrisch zueinander angeordnet.

Fig. 5 zeigt in einer perspektivischen, teilweise geschnittenen Darstellung das Taumelrad 4 nach Fig. 4. Das einteilig aus Stahlblech gebildete Taumelrad 4 ist aus einem Metallrohling geformt, in dem das angeformte Zahnrad 28 mittels Durchprägen des Metallrohlings gebildet ist. Es ist dazu in den Grundkörper 44 eine Innenverzahnung 48 eingeprägt, die auf der gegenüberliegenden Seite als entsprechend ausgebildete Außenverzahnung 43 des Zahnrades 28 abgebildet ist. Die gezeigte Innenverzahnung 48 ist für die Funktion der erfindungsgemäßen Getriebeanordnung ohne Bedeutung, erlaubt jedoch auf einfache Weise die Herstellung der Außenverzahnung 43.

In den Fig. 6 bis 9 ist der Bewegungsablauf des Taumelrades 4 in aufeinander folgenden Phasenbildern dargestellt.

Fig. 6 zeigt in einer schematischen Blockdarstellung die Zwischenplatte 32 mit der gehäusefesten Radialnut 14. Das eingelegte Taumelrad 4 ist mittels einer Führungseinrichtung 7 bezogen auf die Zwischenplatte 32 im wesentlichen drehfest gehalten und zur Ausführung einer Taumelbewegung auf einer Kreisbahn 8 freigegeben. Die Führungseinrichtung 7 umfaßt eine in einer radialen Richtung 9 bezogen auf die Kreisbahn 8 wirkende Radialführung 10 und kombiniert damit eine quer zur radialen Richtung 9 wirkende Schwenklagerung 11 des Taumelrades 4. Die kombinierte Radialführung 10 und Schwenklagerung 11 ist gebildet, indem der Gelenkkopf 15 des Schwenkarmes 12 in die Radialnut 14 eingreift. Der Gelenkkopf 15 ist dabei zwischen zwei zueinander parallelen Wänden 16, 17 der Radialnut 14 spielfrei gleitend und schwenkbar geführt. Durch die parallelen Wände 16, 17 der Radialnut 14 ist ein Führungsabschnitt 18 der Radialnut 14 gebildet, an den sich radial innenliegend ein nach innen sich erweiternder Schwenkabschnitt 19 anschließt.

Der Lagerzapfen 21 liegt in der gezeigten Darstellung auf der Kreisbahn 8 exzentrisch in Richtung der Radialnut 14. Der Gelenkkopf 15 ist dabei weitestmöglich in den Führungsabschnitt 18 eingetaucht.

Nach Fig. 7 ist der Lagerzapfen 21 im Richtung eines Pfeiles 50 auf der Kreisbahn 8 um eine Vierteldrehung bewegt. Mit dem Lagerzapfen 21 hat auch das Taumelrad 4 die gleiche Bewegung auf der Kreisbahn 8 ausgeführt. Die Kreisbahnbewegung des Taumelrades 4 in Folge der exzentrischen Kreisbewegung des Lagerzapfens 21 ist durch die Führungseinrichtung 7 freigegeben, indem der Gelenkkopf 15 eine lineare Radialbewegung entgegen der radialen Richtung 9 und quer dazu eine entsprechende Schwenkbewegung in Richtung des Doppelpfeiles 51 freigibt. Mittels des in die Radialnut 14 eingreifenden Schwenkarmes 12 ist eine Eigendrehung des Taumelrades 4 im wesentlichen behindert, wobei sich eine nur geringe, oszillierende Eigendrehung des Taumelrades 4 um die in Fig. 6 gezeigte Ruhelage in Folge der Schwenkbewegung 51 einstellt. Der erweiterte Schwenkabschnitt 19 gibt die Schwenkbewegung des Schwenkarmes 12 frei.

Fig. 8 zeigt als weiteres Phasenbild die Anordnung nach den Fig. 6 und 7, bei dem der Lagerzapfen 21 derart in Drehrichtung 50 weiterbewegt ist, daß das Taumelrad 4 in seiner unteren Position liegt. Der Gelenkkopf 15 ist in der Radialnut 14 entgegen dem Pfeil 9 so weit nach unten gewandert, daß er im unteren Bereich des Führungsabschnittes 18 liegt. Durch eine weitere Drehung in Richtung des Pfeiles 50 nach Fig. 9 bewegt sich der Gelenkkopf 15 wieder in Richtung des Pfeiles 9 in die Radialnut 14 hinein, wobei das Taumelrad 4 eine Schwenkbewegung um den Gelenkkopf 15 ausführt.

Insgesamt führt die Schwenkbewegung des Taumelrades 4 in Verbindung mit der kombinierten, senkrecht dazu stehenden Radialbewegung zu einer Bewegung auf der Kreisbahn 8, wobei das Zahnrad 43 keine Eigendrehung ausführt. Das auf der Kreisbahn 8 drehfrei bewegte Zahnrad 43 bildet zusammen mit der Innenverzahnung 39 des Abtriebsrades 6 (Fig. 3) die Verzahnung 5 (Fig. 2) zum untersetzten Antrieb des Abtriebsrades 6.

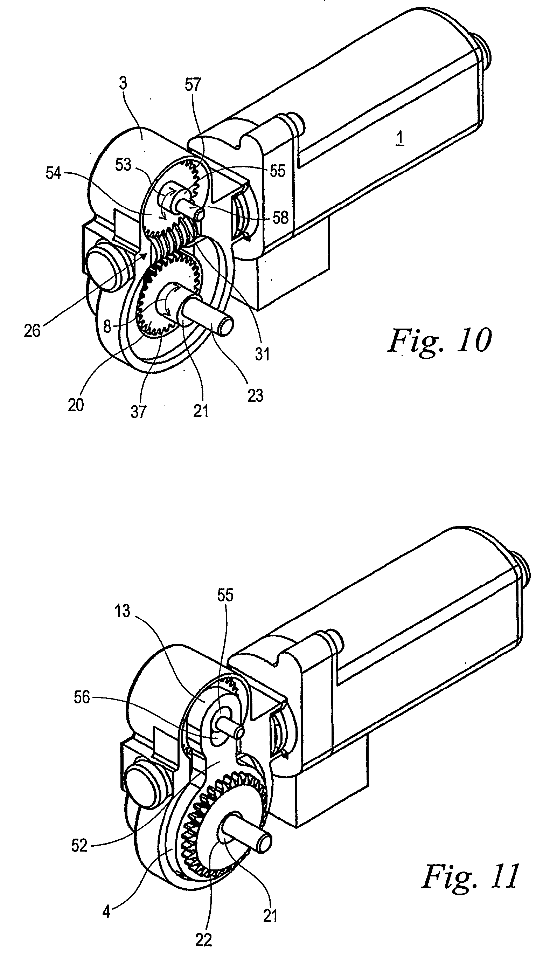

Fig. 10 zeigt in einer perspektivischen Ansicht eine Ausführungsvariante des Stellantriebes nach den Fig- 1 bis 9 in teilweise demontiertem Zustand. In dem am Antriebsmotor 1 angeflanschten Gehäuse 3 ist mittig der Schneckentrieb 26 mit der Antriebsschnecke 31 angeordnet. In der gezeigten Darstellung liegt der Exzenter 20 unterhalb der Antriebsschnecke 31, während ein weiterer Exzenter 54 auf der gegenüberliegenden Seite der Antriebsschnecke 31 bzw. des Schneckentriebes 26 angeordnet ist. Die beiden Exzenter 20, 54 sind um Achsbolzen 23, 58 drehbar im Gehäuse 3 gelagert. Die Lagerung an den Achsbolzen 23, 58 kann entsprechend der Darstellung nach Fig. 2 ausgeführt sein. Es kann auch zweckmäßig sein, daß die Achsbolzen 23, 58 an die Exzenter 20, 54 angeformt oder in sie eingepreßt sind und drehbar im Gehäuse 3 gelagert sind. Die Exzenter 20, 54 greifen mit ihren Stirnverzahnungen 37, 57 in die Antriebsschnecke 31 ein. Beide Stirnverzahnungen 37, 57 weisen die gleiche Zähnezahl auf, in dessen Folge sie sich unter Einwirkung der drehenden Antriebsschnecke 31 gegenläufig und mit gleicher Drehzahl drehen. Der untere Exzenter 54 ist mit einem exzentrisch angeordneten Lagerzapfen 55 versehen, der sich im angetriebenen Zustand auf einer Kreisbahn 53 um die Achse des Achsbolzens 58 bewegt. Der Lagerzapfen 21 bewegt sich gegenläufig dazu auf seiner Kreisbahn 8 um die Achse des Achsbolzens 23. Beide Kreisbahnen 8, 53 haben den gleichen Durchmesser. Der Lagerzapfen 55 ist derart relativ zum Lagerzapfen 21 des oberen Exzenters 20 ausgerichtet, daß sie auf ihren jeweiligen Kreisbahnen 8, 53 eine synchron gegenläufige Bewegungskomponente senkrecht zur Längsachse der Antriebsschnecke 31 und eine synchron gleichlaufende Bewegungskomponente in Achsrichtung der Antriebsschnecke 31 ausführen.

In Fig. 11 ist die Anordnung nach Fig. 10 mit einem aufgesetzten Taumelrad 4 gezeigt, wobei das Taumel rad 4 einen angeformten Führungsarm 52 aufweist. Das Taumel rad 4 ist auf der im Zusammenhang mit den Fig. 1 bis 9 beschriebenen Weise auf dem Lagerzapfen 21 mittels einer Lageröffnung 22 gelagert. An seinem freien Ende ist der Führungsarm 52 mit einer Lageröffnung 56 versehen, die im gezeigten Ausführungsbeispiel als Langloch ausgebildet ist. Die Längsachse des Langloches erstreckt sich längs zum Führungsarm 52. Der Lagerzapfen 55 greift in die Lageröffnung 56 derart ein, daß er quer zur Längserstreckung des Langloches zumindest näherungsweise spielfrei und in der Längsrichtung gleitend beweglich geführt ist.

Bei der oben beschriebenen synchronen Drehbewegung der beiden Lagerzapfen 21, 55 führt die Baueinheit aus dem Taumelrad 4 und dem Führungsarm 52 eine parallel verschobene Bewegung entsprechend der Kreisbahn 8 (Fig. 10) aus. Es ist dadurch eine Zwangsführung des freien Endes 13 vom Führungsarm 52 auf einer Kreisbahn synchron zur Taumelbewegung des Taumelrades 4 auf dessen Kreisbahn 8 gebildet. Die Baueinheit aus dem Taumelrad 4 und dem Führungsarm 52 ist selbst keiner Eigendrehung unterzogen. Die parallel verschobene Kreisbewegung wird in der im Zusammenhang mit den Fig. 1 bis 9 näher beschriebenen Weise zur Abtriebsseite hin übertragen.

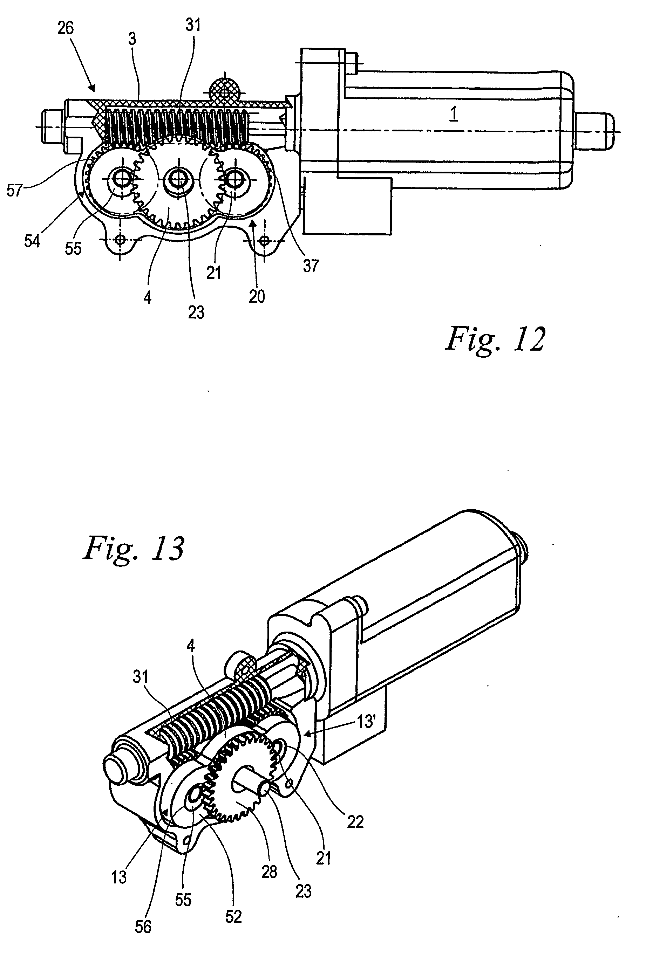

Fig. 12 zeigt in einer teilweise geschnittenen Seitenansicht eine Variante der Anordnung nach den Fig. 10 und 11, bei der der Exzenter 20 sowie ein weiterer Exzenter 54 gegeneinander versetzt auf der gleichen Seite des Schneckentriebes 26 angeordnet und von diesem angetrieben sind. Das TaumeLrad 4 ist mittig zwischen den beiden äußeren Exzentern 20, 54 angeordnet. Die beiden Exzenter 20, 54 sind außenseitig mit jeweils einer Stirnverzahnung 37, 57 versehen, die in die Antriebsschnecke 31 des Schneckentriebes 26 eingreifen. Sie werden infolge ihrer gleichen Zähnezahl und ihrer gleichseitigen Anordnung zur Antriebsschnecke 31 synchron zueinander mit gleicher Drehzahl und gleichsinnig angetrieben. Ihre beiden Lagerzapfen 21, 55 sind gegeneinander derart ausgerichtet, daß sie phasengleiche Bewegungen auf Kreisbahnen 8, 53 (Fig. 10) ausführen.

Auf die Lagerzapfen 21, 55 ist das Taumelrad 4 mit dem zweiendigen Führungsarm 52 aufgesteckt. Eine mittige Öffnung des Taumelrades 4 ist dabei so groß bemessen, daß sie den Achsbolzen 23 mit Spiel umgreift. Der Achsbolzen 23 hat keine Lagerfunktion für das Taumelrad 4, sondern nur für das nach Fig. 2 aufzusteckende Abtriebsrad 6.

Einzelheiten zur Anordnung des Taumelrades 4 sind in der perspektivischen Darstellung nach Fig. 13 zu erkennen. Das Taumelrad 4 ist einteilig mit dem Führungsarm 52 ausgeführt, der im gezeigten Ausführungsbeispiel zwei in gegenüber liegende radiale Richtung sich erstreckende, parallel zur A-ntriebsschnecke 31 liegende freie Enden 13, 13' aufweist. In den beiden freien Enden 13, 13' ist je eine Lageröffnung 22, 56 in Form einer zylindrischen Bohrung angeordnet, in die die beiden Lagerzapfen 21, 55 spielfrei eingreifen. Durch Drehung der Antriebsschnecke 31 mittels des Antriebsmotors 1 werden die beiden Exzenter 20, 54 in eine phasengleiche, synchrone und gleichsinnige Drehung versetzt. Die Kreisbahnbewegung der zugehörigen exzentrischen Lagerzapfen 21, 55 führen zu einer translatorischen Parallelverschiebung des Führungsarmes 52 und des mittig daran gehaltenen Taumelrades 4 auf entsprechenden Kreisbahnen 8, 53 (Fig. 10). Das am Taumelrad 4 angeformte Zahnrad 28 überträgt dabei seine eigendrehungsfreie Kreisbahnbewegung in Richtung des Abtriebes auf der im Zusammenhang mit den Fig. 1 bis 9 beschriebenen Weise.

Beide Exzenter 20, 54 nach den Fig. 10 bis 13 können identische Metallteile oder aus spritzgegossenem Kunststoff sein. Insbesondere ist eine Bauweise zweckmäßig, bei der der geringer belastete Exzenter 54 aus Kunststoff und der höher belastete abtriebsseitige Exzenter 20 aus Metall gefertigt ist. In den übrigen Merkmalen und Bezugszeichen stimmen die Ausführungen nach den Fig. 10 bis 13 untereinander und mit dem Ausführungsbeispiel nach den Fig. 1 bis 9 überein.

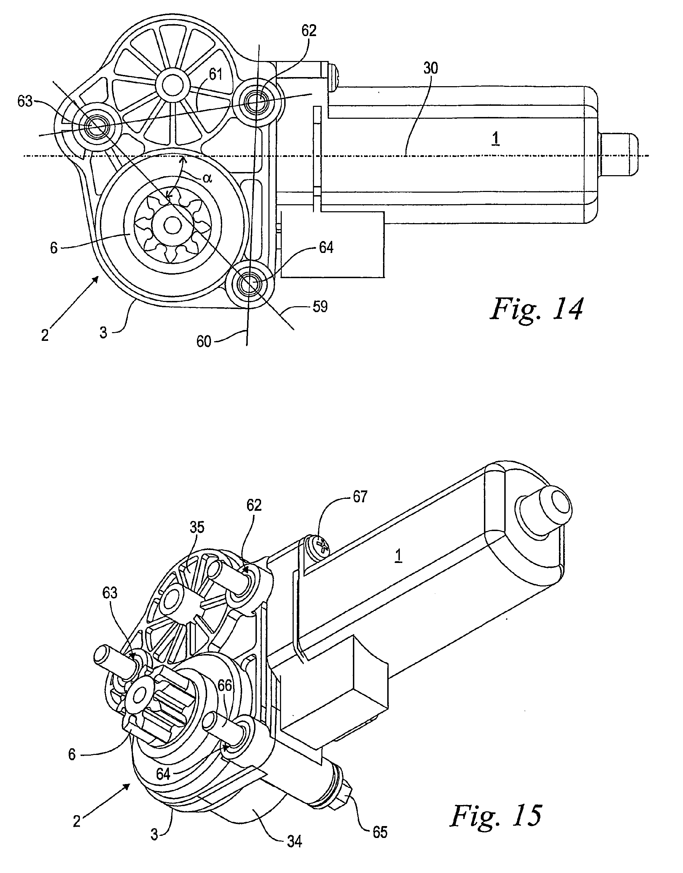

Fig. 14 zeigt in einer Draufsicht eine Variante des Ausführungsbeispieles nach den Fig. 10 und 11, bei dem das Gehäuse 3 des Untersetzungsgetriebes 2 insgesamt drei Schraublöcher 62, 63, 64 aufweist. Die Schraublöcher 62, 63, 64 sind achsparallel zur Drehachse des Abtriebsrades 6 angeordnet und gehen vollständig durch das Gehäuse 3 über dessen gesamte Dicke hindurch. Zur Definition der Lage der Schraublöcher 62, 63, 64 sind durch deren Mittelpunkte in der zeichnerischen Darstellung nach Fig. 14 Linien 59, 60, 61 gelegt. Die beiden Schraublöcher 63, 64 sind durch die Linie 59 miteinander verbunden, die in einem Winkel α von etwa 45° zur Drehachse 30 des Antriebsmotors 1 bzw. der Antriebsschnecke 31 (Fig. 10) liegt. Das Abtriebsrad 6 ist etwa mittig zwischen den beiden Schraublöchern 63, 64 angeordnet, wobei dessen Drehachse mit nur geringem Abstand zur Linie 59 liegt. Die beiden Schraublöcher 62, 64 sind derart relativ zueinander angeordnet, daß die sie verbindende Linie 60 etwa in einem rechten Winkel zur Drehachse 30 und dabei angrenzend an die Stirnseite des Antriebsmotors 1 liegt. Die durch die beiden Schraublöcher 62, 63 geführte Linie 61 verläuft näherungsweise parallel zur Drehachse 30, also in einem Winkel von etwa 0°. Für die genannten Winkelangaben gilt ein Toleranzbereich von bevorzugt ± 10° und insbesondere ± 5°.

Die Anordnung nach Fig. 14 ist in perspektivischer Darstellung in der Fig. 15 gezeigt, demnach das Gehäuse 3 durch ein Unterteil 34 und ein Deckelteil 35 gebildet ist, die beide aus Kunststoff gefertigt sind. Das Gehäuse 3 des Untersetzungsgetriebes 2 ist mittels Schrauben 67 mit dem Antriebsmotor 1 verschraubt. Das Unterteil 34 und das Deckelteil 35 können lose aufeinandergesteckt, miteinander verclipst, verklebt, verschweißt oder miteinander verschraubt sein, wodurch eine vormontierte Baugruppe als Stellantrieb gebildet ist .

Zur Befestigung des Stellantriebes an einer durch den Stellantrieb anzutreibenden Baugruppe - wie eine Kraftfahrzeug-Sitzverstellung oder dergleichen - sind insgesamt drei Befestigungsschrauben 65 vorgesehen, die durch die entsprechenden Schraublöcher 62, 63, 64 hindurchgesteckt sind. Der perspektivischen Darstellung nach Fig. 15 ist zu entnehmen, daß die Schraublöcher 62, 63, 64 durch zylindrische Ausformungen des Gehäuses 3 hindurchgeführt sind, deren Länge zumindest näherungsweise der in Achsrichtung der Befestigungsschrauben 65 gemessenen Dicke des Gehäuses 3 entspricht. Die Befestigungsschrauben 65 sind als Bundschrauben ausgeführt, die im Bereich der durchgehenden Schraublöcher 62, 63, 64 einen glatten zylindrischen Bund ohne Gewinde aufweisen. Der zylindrische Bund liegt ohne oder mit nur geringem Spiel in den jeweiligen Schraublöchern 62, 63, 64. Die Befestigungsschrauben 65 sind lediglich an ihren freien, hervorstehenden Enden mit je einem Gewindeabschnitt 66 versehen. Das Unterteil 34 und das Deckelteil 35 sind mittels des zylindrischen, glatten Bundes der Befestigungsschrauben 65 bezogen auf die Trennebene zwischen den beiden Bauteilen gegeneinander ausgerichtet und gegen Verschieben gesichert. Eine axiale Verspannung von Unterteil 34 und Deckelteil 35 erfolgt zusammen mit der Verschraubung des Stellantriebes mit der davon anzutreibenden Baugruppe, indem die Gewindeabschnitte 66 in entsprechende Innengewinde dieser Baugruppe eingedreht werden. Der hier gezeigte vormontierte Stellantrieb erhält dabei unter Einwirkung der festgespannten Befestigungsschrauben 65 seine konstruktiv vorgesehene, abschließende Festigkeit im Bereich des Gehäuses 3. Eine vergleichbare Verschraubung kann auch bei einer einteiligen Gehäuseausführung und/oder bei Gehäusen aus Metall oder anderen Werkstoffen zweckmäßig sein. In den übrigen Merkmalen und Bezugszeichen stimmt das Ausführungsbeispiel nach den Fig. 14 und 15 mit dem nach den Fig. 10 und 11 überein.

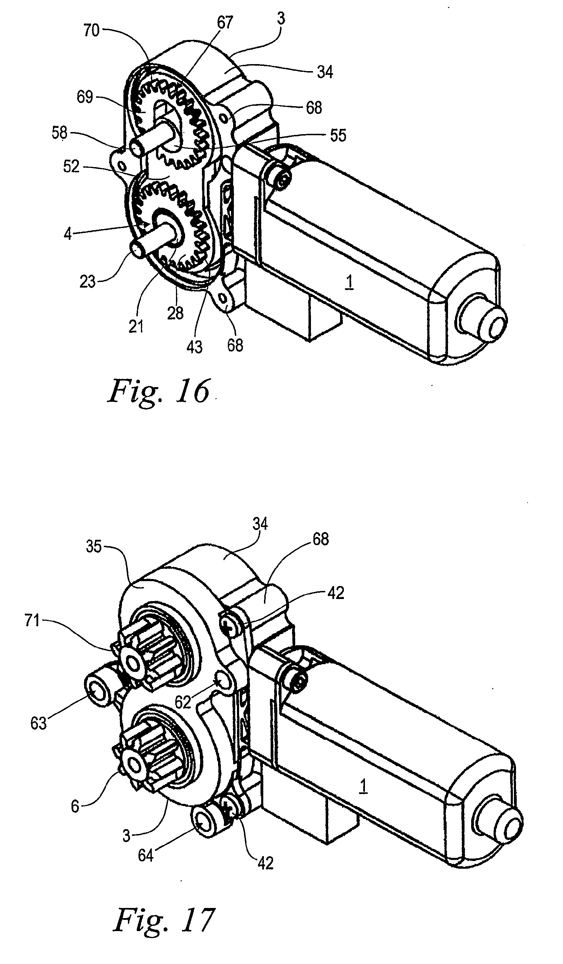

Eine weitere Variante des Stellantriebes ist in Fig. 16 gezeigt, wobei der besseren Übersichtlichkeit halber vom Gehäuse 3 nur dessen Unterteil 34 gezeigt ist. Die Anordnung entspricht derjenigen nach Fig. 11, wobei jedoch an beiden Enden des Führungsarmes 52 je ein Taumelrad 4, 67 angeordnet ist. Die beiden Taumelräder 4, 67, die mittels des Führungsarmes 52 einteilig miteinander verbunden sind, laufen vergleichbar zur Ausführung nach Fig. 11 um die beiden Lagerzapfen 21, 55 und führen gemeinsam eine synchrone, kreisende Taumelbewegung ohne Eigendrehung aus. Die beiden Taumelräder 4, 67 sind jeweils mit identischen Zahnrädern 28, 69 versehen, deren Außenverzahnungen 43, 70 die gleiche Zähnezahl aufweisen.

Fig. 17 zeigt die Anordnung nach Fig. 16 im fertig vormontierten Zustand. Auf die beiden in Fig. 16 gezeigten Achsbolzen 23, 58 sind identische Abtriebsräder 6, 71 aufgesteckt, die in ihrer Ausführung den Abtriebsrädern 6 der weiteren, zuvor gezeigten Ausführungsbeispiele entsprechen. Beim Betrieb des Antriebsmotors 1 ergibt sich für die beiden Abtriebsräder 6, 71 eine gleichgerichtete, untersetzte Drehung mit gleicher Drehzahl. Es kann auch zweckmäßig sein, die Außenverzahnungen 43, 70 (Fig. 16) mit unterschiedlicher Zähnezahl zu versehen, woraus sich unterschiedliche Drehzahlen der beiden Abtriebsräder 6, 71 ergeben. Zusätzlich oder alternativ kann es auch zweckmäßig sein, die beiden Abtriebsräder 6, 71 mit einer abtriebsseitigen Verzahnung von unterschiedlicher Zähnezahl zu versehen. Den Abtriebsrädern 6, 71 kann noch jeweils eine Schaltkupplung nachgeordnet sein. Neben einem synchronen Antrieb zweier Baugruppen kann dadurch auch eine einzelne, unabhängige Ansteuerung erfolgen.

Das in Fig. 17 im montierten Zustand gezeigte Deckelteil 35 ist mittels selbstschneidender Schrauben 42 mit dem Unterteil 34 verschraubt, wobei die selbstschneidenden Schrauben 42 in Bohrungen mit Untermaß in entsprechenden Schraubdomen 68 (Fig. 16) des Unterteils 34 eingedreht sind. Die Verschraubung mittels der Schrauben 42 erzeugt eine vormontierte Baugruppe. Zur Erzielung der abschließenden, konstruktiv vorgesehenen Festigkeit sind im Gehäuse 3 noch Schraublöcher 62, 63, 64 vorgesehen, die zur Aufnahme von Befestigungsschrauben 65 entsprechend dem Ausführungsbeispiel nach den Fig. 14 und 15 vorgesehen sind. Die Lage und Ausführung dieser Verschraubung entspricht dem vorgenannten Ausführungsbeispiel. Es kann auch eine Relativlage der Schraublöcher 62, 63 zum Abtriebsrad 71 bzw. zur Drehachse 30 (Fig. 14) vorgesehen sein, die analog und ggf. spiegelsymmetrisch zur Anordnung der Schraublöcher 63, 64 nach Fig. 14 ausgeführt ist. In den übrigen Merkmalen und Bezugszeichen stimmt das Ausführungsbeispiel nach den Fig. 16 und 17 mit den weiteren Ausführungsbeispielen überein.

## Patentansprüche

1. Stellantrieb, insbesondere für Komponenten eines Kraftfahrzeuges wie eine elektrische Sitzverstellung oder dgl., mit einem Antriebsmotor (1) und einem Untersetzungsgetriebe (2), wobei das Untersetzungsgetriebe (2) ein Gehäuse (3), ein Taumelrad (4), ein mit dem Taumelrad (4) über eine Verzahnung (5) zusammenwirkendes Abtriebsrad (6) und eine Führungseinrichtung (7) für das Taumelrad (4) aufweist, und wobei das Taumelrad (4) mittels der Führungseinrichtung (7) bezogen auf das Gehäuse (3) im wesentlichen drehfest gehalten und zur Ausführung einer Taumelbewegung auf einer Kreisbahn (8) freigegeben ist,
**dadurch gekennzeichnet, daß** die Führungseinrichtung (7) einen insbesondere einteilig an das Taumelrad (4) angeformten Führungsarm (52) umfaßt, der mittels einer Radialführung (10) in einer bezogen auf die Kreisbahn (8) radialen Richtung (9) verschieblich und im wesentlichen drehfest gehalten ist.

2. Stellantrieb nach Anspruch 1,
**dadurch gekennzeichnet, daß** zum Antrieb des Taumelrades (4) ein Exzenter (20) mit einem exzentrisch umlaufenden Lagerzapfen (21) vorgesehen ist, der in eine insbesondere mittige Lageröffnung (22) des Taumelrades (4) eingreift.

3. Stellantrieb nach Anspruch 1 oder 2,
**dadurch gekennzeichnet, daß** zum Antrieb des Exzenters (20) ein Schneckentrieb (26) vorgesehen ist.

4. Stellantrieb nach einem der Ansprüche 1 bis 3,
**dadurch gekennzeichnet, daß** der Führungsarm (52) des Taumelrades (4) als Schwenkarm (12) ausgeführt ist, dessen radial außen liegendes freies Ende (13) an einer Schwenklagerung (11) der Radialführung (10) gelagert ist.

5. Stellantrieb nach Anspruch 4,
**dadurch gekennzeichnet, daß** das freie Ende (13) des Schwenkarmes (12) in eine gehäusefeste Radialnut (14) eingreift.

6. Stellantrieb nach Anspruch 5,
**dadurch gekennzeichnet, daß** das freie Ende (13) des Schwenkarmes (12) einen gerundet erweiterten Gelenkkopf (15) aufweist, der zwischen zwei zueinander parallelen Wänden (16, 17) der Radialnut (14) gleitend geführt ist.

7. Stellantrieb nach Anspruch 6,
**dadurch gekennzeichnet, daß** durch die parallelen Wände (16, 17) der Radialnut (14) ein Führungsabschnitt (18) gebildet ist, an den sich radial innenliegend ein nach innen sich erweiternder Schwenkabschnitt (19) anschließt.

8. Stellantrieb nach einem der Ansprüche 1 bis 3,
**dadurch gekennzeichnet, daß** das freie Ende (13) des Führungsarmes (52) auf einer Kreisbahn synchron zur Taumelbewegung des Taumelrades (4) auf dessen Kreisbahn (8) zwangsgeführt ist.

9. Stellantrieb nach Anspruch 8,
**dadurch gekennzeichnet, daß** zur Zwangsführung des freien Endes (13) vom Führungsarm (52) ein weiterer Exzenter (54) mit einem exzentrisch umlaufenden Lagerzapfen (55) vorgesehen ist, der in eine Lageröffnung (56) des freien Endes (13) eingreift.

10. Stellantrieb nach Anspruch 9,
**dadurch gekennzeichnet, daß** die beiden Exzenter (20, 54) auf gegenüberliegenden Seiten des Schneckentriebes (26) angeordnet und von diesem angetrieben sind.

11. Stellantrieb nach Anspruch 9,
**dadurch gekennzeichnet, daß** die beiden Exzenter (20, 54) in Achsrichtung des Schneckentriebes (26) gegeneinander versetzt auf der gleichen Seite des Schneckentriebes (26) angeordnet und von diesem angetrieben sind.

12. Stellantrieb nach Anspruch 11,
**dadurch gekennzeichnet, daß** das Taumelrad (4) einen in zwei gegenüberliegende radiale Richtungen sich erstrekkenden Führungsarm (52) mit zwei gegenüberliegenden freien Enden (13, 13') aufweist und insbesondere etwa mittig zwischen den beiden Exzentern (20, 54) angeordnet ist, wobei die beiden freien Enden (13, 13') des Führungsarmes (52) an dem jeweils zugeordneten Exzenter (20, 54) zwangsgeführt sind.

13. Stellantrieb nach einem der Ansprüche 8 bis 12,
**dadurch gekennzeichnet, daß** an beiden Enden des Führungsarmes (52) je ein Taumelrad (4, 67) zum Antrieb je eines Abtriebsrades (6, 71) angeordnet ist.

14. Stellantrieb nach einem der Ansprüche 2 bis 13,
**dadurch gekennzeichnet, daß** der Exzenter (20) auf einem durchgehenden, insbesondere aus Stahl gefertigten Achsbolzen (23) drehbar gelagert ist, wobei der Lagerzapfen (21) in seinem Durchmesser derart bemessen ist, daß der Achsbolzen (23) innerhalb der Umfangskontur des Lagerzapfens (21) liegt.

15. Stellantrieb nach Anspruch 14,
**dadurch gekennzeichnet, daß** der Lagerzapfen (21) insbesondere einteilig mit dem Exzenter (20) aus selbstschmierendem Kunststoff gefertigt ist, wobei der Lagerzapfen (21) in seinem in Richtung der Exzentrizität (24) liegenden Bereich eine gegen den Achsbolzen (23) abgestützte Metalleinlage (25) aufweist.

16. Stellantrieb nach Anspruch 14 oder 15,
**dadurch gekennzeichnet, daß** das Abtriebsrad (6) gemeinsam mit dem Exzenter (20) auf dem Achsbolzen (23) gel a-gert ist.

17. Stellantrieb nach einem der Ansprüche 1 bis 16,
**dadurch gekennzeichnet, daß** das Abtriebsrad (6) eine außenseitige Lagerfläche (27) aufweist, mittels derer das Abtriebsrad (6) in dem Gehäuse (3) drehbar gelagert ist.

18. Stellantrieb nach einem der Ansprüche 1 bis 17,
**dadurch gekennzeichnet, daß** ein an das Taumelrad (4) angeformtes Zahnrad (28) mittels Durchprägen eines Metallrohlings gebildet ist.

19. Stellantrieb nach einem der Ansprüche 1 bis 18,
**dadurch gekennzeichnet, daß** insbesondere als Bundschrauben ausgeführte Befestigungsschrauben (65) durch das insbesondere aus Kunststoff ausgeführte Gehäuse (3) des Untersetzungsgetriebes (2) über zumindest näherungsweise dessen gesamte Dicke hindurchgeführt und zur Verschraubung des Gehäuses (3) mit der durch den Stellantrieb anzutreibenden Baugruppe vorgesehen sind.

20. Stellantrieb nach Anspruch 19,
**dadurch gekennzeichnet, daß** das Gehäuse (3) durch ein Unterteil (34) und ein Deckelteil (35) gebildet ist, wobei die Befestigungsschrauben (65) durch das Unterteil (34) und das Deckelteil (35) hindurchgeführt sind.

21. Stellantrieb nach Anspruch 19 oder 20,
**dadurch gekennzeichnet, daß** zumindest zwei der Befestigungsschrauben auf einer Linie (59) angeordnet sind, die in einem Winkel (α) von zumindest näherungsweise 45° zu einer Drehachse (3) des Antriebsmotors (1) bzw. einer Antriebsschnecke (31) liegt, wobei das Abtriebsrad (6) bevorzugt zwischen den beiden Befestigungsschrauben liegt.

## Claims

1. Actuator, in particular for components of a motor vehicle such as an electric seat adjuster or suchlike, with a drive motor (1) and a reduction gear (2), the reduction gear (2) comprising a housing (3), a swash gear (4), a drive output gear (6) that cooperates with the swash gear (4) by virtue of gearteeth (5) and a guiding device (7) for the swash gear (4), and such that the swash gear (4) is held essentially rotationally fixed relative to the housing (3) by the guiding device (7) and, to carry out a wobble movement, is released to follow a circular track (8),
**characterised in that** the guiding device (7) comprises a guiding arm (52) in particular formed integrally with the swash gear (4), which is held by means of a radial guide (10) so that it can move in a radial direction (9) relative to the circular track (8) but is essentially rotationally fixed.

2. Actuator according to Claim 1,
**characterised in that** to drive the swash gear (4) an eccentric (20) with an eccentrically revolving journal pin (21) is provided, which engages in a bearing aperture (22) of the swash gear (4), in particular a central one.

3. Actuator according to Claims 1 or 2,
**characterised in that** a worm-gear drive (26) is provided to drive the eccentric (20).

4. Actuator according to any of Claims 1 to 3,
**characterised in that** the guiding arm (52) of the swash gear (4) is made as a swivelling arm (12) whose radially outer free end (13) is mounted on a pivot bearing (11) of the radial guide (10).

5. Actuator according to Claim 4,
**characterised in that** the free end (13) of the swivelling arm (12) engages in a radial groove (14) formed integrally with the housing (3).

6. Actuator according to Claim 5,
**characterised in that** the free end (13) of the swivelling arm (12) has a rounded, expanded joint head (15) which is guided to slide between two parallel walls (16, 17) of the radial groove (14).

7. Actuator according to Claim 6,
**characterised in that** the parallel walls (16, 17) of the radial groove (14) form a guiding section (18) which is joined radially on the inside to a swivelling section (19) that widens inwards.

8. Actuator according to any of Claims 1 to 3,
**characterised in that** the free end (13) of the guiding arm (52) is positively guided on a circular track synchronously with the wobble movement of the swash gear (4) on its circular track (8).

9. Actuator according to Claim 8,
**characterised in that** for the positive guiding of the free end (13) of the guiding arm (52) a further eccentric (54) with an eccentrically revolving journal pin (55) is provided which engages in a bearing aperture (56) of the said free end (13).

10. Actuator according to Claim 9,
**characterised in that** the two eccentrics (20, 54) are arranged on opposite sides of the worm-gear drive (26) and are driven by the latter.

11. Actuator according to Claim 9,
**characterised in that** the two eccentrics (20, 54) are arranged axially offset from one another on the same side of the worm-gear drive (26) and are driven by the latter.

12. Actuator according to Claim 11,
**characterised in that** the swash gear (4) has a guiding arm (52) that extends in two mutually opposite radial directions with two opposite free ends (13, 13') and, in particular, is arranged approximately centrally between the two eccentrics (20, 54), such that the two free ends (13, 13') of the guiding arm (52) are positively guided on the respectively associated eccentric (20, 54).

13. Actuator according to any of Claims 8 to 12,
**characterised in that** a respective swash gear (4, 67) is arranged at each of the two ends of the guiding arm (52) to drive a respective drive output gear (6, 71).

14. Actuator according to any of Claims 2 to 13,
**characterised in that** the eccentric (20) is mounted to rotate on a through-going axle spindle (23), in particular one made of steel, and the diameter of the journal pin (21) is chosen such that the axle spindle (23) runs inside the circumferential contour of the said axle spindle (23).

15. Actuator according to Claim 14,
**characterised in that** the journal pin (21) is in particular formed integrally with the eccentric (20), both being made of a self-lubricating plastic material, and the journal pin (21) has in its area located in the direction of eccentricity (24) a metal insert (25) that rests against the axle spindle (23).

16. Actuator according to Claims 14 or 15,
**characterised in that** the drive output gear (6) is mounted together with the eccentric (20) on the axle spindle (23).

17. Actuator according to any of Claims 1 to 16,
**characterised in that** the drive output gear (6) has on its outside a bearing surface (27) by means of which the drive output gear (6) is mounted to rotate in the housing (3).

18. Actuator according to any of Claims 1 to 17,
**characterised in that** a gearwheel (28) formed on the swash gear (4) is made by stamping though a metallic blank.

19. Actuator according to any of Claims 1 to 18,
**characterised in that** fixing screws (65), in particular ones made as collar screws, are passed through the housing (3), in particular one made of plastic, of the reduction gear (2) and extend over at least approximately its full thickness, these screws being provided in order to screw the housing (3) to the structural group that is to be actuated by the actuator.

20. Actuator according to Claim 19,
**characterised in that** the housing (3) consists of a lower portion (34) and a cover portion (35), and the fixing screws (65) pass though both the lower portion (34) and the upper portion (35).

21. Actuator according to Claims 19 or 20,
**characterised in that** at least two of the fixing screws are arranged on a line (59) that extends at an angle (α) of at least approximately 45° to a rotation axis (30) of the drive motor (1) or of a drive worm-gear (31), and the drive output gear (6) is preferably located between the two fastening screws.

## Revendications

1. Servomoteur, en particulier pour des composants d'un véhicule automobile tel qu'un réglage de sièges électriques ou similaires, avec un moteur de commande (1) et un démultiplicateur (2), le démultiplicateur (2) comprenant un boîtier (3), une roue oscillante (4), une roue de sortie (6) coopérant avec la roue oscillante (4) par l'intermédiaire d'un engrenage (5), et un dispositif de guidage (7) pour la roue oscillante (4), et la roue oscillante (4) étant maintenue essentiellement solidaire en rotation au moyen du dispositif de guidage (7) par rapport au boîtier (3) et étant libérée pour la réalisation d'une nutation sur une trajectoire circulaire (8), **caractérisé en ce que** le dispositif de guidage (7) comprend un bras de guidage (52) formé en particulier d'une seule pièce sur la roue oscillante (4), lequel bras de guidage est maintenu coulissant et essentiellement solidaire en rotation au moyen d'un guidage radial (10) dans une direction radiale par rapport à la trajectoire circulaire (8).

2. Servomoteur selon la revendication 1, **caractérisé en ce que**, pour l'entraînement de la roue oscillante (4) est prévu un excentrique (20) avec un tourillon (21) pivotant de façon excentrique qui s'engage dans un orifice de palier (22) en particulier central de la roue oscillante (4).

3. Servomoteur selon la revendication 1 ou 2, **caractérisé en ce que** pour l'entraînement de l'excentrique (20) est prévue une transmission à vis sans fin (26).

4. Servomoteur selon une des revendications 1 à 3, **caractérisé en ce que** le bras de guidage (52) de la roue oscillante (4) est conçu comme un bras pivotant (12) dont l'extrémité (13) libre située radialement extérieurement est logée sur un logement pivotant (11) du guidage radial (10).

5. Servomoteur selon la revendication 4, **caractérisé en ce que** l'extrémité libre (13) du bras pivotant (12) s'engage dans une rainure radiale (14) fixe du boîtier.

6. Servomoteur selon la revendication 5, **caractérisé en ce que** l'extrémité libre (13) du bras pivotant (12) comprend une tête articulée (15) avec un élargissement arrondi qui est guidée de façon coulissante entre deux parois (16, 17) parallèles l'une à l'autre de la rainure radiale (14).

7. Servomoteur selon la revendication 6, **caractérisé en ce qu'**un segment de guidage (18) est formé par les parois parallèles (16, 17) de la rainure radiale (14), auquel se rattache radialement à l'intérieur un segment pivotant (19) s'élargissant vers l'intérieur.

8. Servomoteur selon une des revendications 1 à 3, **caractérisé en ce que** l'extrémité libre (13) du bras de guidage (52) est contrainte sur une trajectoire circulaire de manière synchronisée avec la nutation de la roue oscillante (4) sur la trajectoire circulaire (8) de celle-ci.

9. Servomoteur selon la revendication 8, **caractérisé en ce qu'**à des fins de contrainte de l'extrémité libre (13) supplémentaire du bras de guidage (52) est prévu un excentrique (54) avec un tourillon (55) en rotation excentrique qui s'engage dans un orifice de palier (56) de l'extrémité libre (13).

10. Servomoteur selon la revendication 9, **caractérisé en ce que** les deux excentriques (20, 54) sont disposés sur des faces opposées de la transmission à vis sans fin (26) et sont entraînés par celle-ci.

11. Servomoteur selon la revendication 9, **caractérisé en ce que** les deux excentriques (20, 54) sont disposés du même côté de la transmission à vis sans fin (26) avec un décalage l'un par rapport à l'autre dans le sens axial de la transmission à vis sans fin (26), et sont entraînés par celle-ci.

12. Servomoteur selon la revendication 11, **caractérisé en ce que** la roue oscillante (4) comprend un bras de guidage (52) s'étendant dans deux directions radiales opposées avec deux extrémités libres opposées (13, 13'), et est disposée sensiblement au centre entre les deux excentriques (20, 54), les deux extrémités libres (13, 13') du bras de guidage (52) étant contraintes au niveau de l'excentrique (20, 54) respectivement associé.

13. Servomoteur selon une des revendications 8 à 12, **caractérisé en ce qu'**au niveau des deux extrémités du bras de guidage (52) est disposée à chaque fois une roue oscillante (4, 67) pour l'entraînement à chaque fois d'une roue de sortie (6, 71).

14. Servomoteur selon une des revendications 2 à 13, **caractérisé en ce que** l'excentrique (20) est logé de façon rotative sur un axe boulonné (23) continu en particulier en acier, le tourillon (21) présentent un diamètre tel que l'axe boulonné (23) se situe à l'intérieur du contour interne du tourillon (21).

15. Servomoteur selon la revendication 14, **caractérisé en ce que** le tourillon (21) est fabriqué en particulier d'un seul tenant avec l'excentrique (20) en plastique autolubrifiant, le tourillon (21) présentant dans sa zone située en direction de l'excentricité (24) une insertion métallique (25) en appui contre l'axe boulonné (23).

16. Servomoteur selon la revendication 14 ou 15, **caractérisé en ce que** la roue de sortie (6) est logée avec l'excentrique (20) sur l'axe boulonné (23).

17. Servomoteur selon une des revendications 1 à 16, **caractérisé en ce que** la roue de sortie (6) présente une surface de logement (27) externe au moyen de laquelle la roue de sortie (6) est logée de façon rotative dans le boîtier (3).

18. Servomoteur selon une des revendications 1 à 17, **caractérisé en ce qu'**une roue dentée (28) formée sur la roue oscillante (4) est formée au moyen de la gravure d'une ébauche métallique.

19. Servomoteur selon une des revendications 1 à 18, **caractérisé en ce que** des vis de fixation (65) réalisées en particulier comme des vis d'assemblage sont dirigées à travers le boîtier (3) conçu en particulier en plastique du démultiplicateur (2) sur au moins pratiquement toute son épaisseur, et sont prévues pour l'assemblage du boîtier (3) avec le sous-groupe devant être commandé par le servomoteur.

20. Servomoteur selon la revendication 19, **caractérisé en ce que** le boîtier (3) est formé d'une partie inférieure (34) et d'une partie de couvercle (35), les vis de fixation (65) étant dirigées à travers la partie inférieure (34) et la partie de couvercle (35).

21. Servomoteur selon la revendication 19 ou 20, **caractérisé en ce qu'**au moins deux des vis de fixation sont disposées sur une ligne (59) qui se situe à un angle (α) d'au moins approximativement 45° par rapport à un axe de rotation (3) du moteur de commande (1) et/ou d'une transmission à vis sans fin (31), la roue de sortie (6) se situant de préférence entre les deux vis de fixation.
